# EUROPEAN PATENT APPLICATION

(11) **EP 1 980 705 A1**
(43) Date of publication of application: **15.10.2008**
(21) Application number: 07007408.3
(22) Date of filing: 11.04.2007
(51) Int. Cl.: E06B 9/24, E06B 9/386, F24J 2/04

(54) **Building comprising a heat exchanger and a sunblind**

(71) Applicant: Oranjedak B.V., 3334 KC Zwijndrecht (NL)
(72) Inventor: Steenmetz, Renatus Antonius, 4818 GE Breda (NL)
(74) Representative: Land, Addick Adrianus Gosling

(57) **Abstract**

Building comprising:
- a heat exchanger which is connected to a heat-regulating system for cooling respectively heating the interior of the building; and
- a sunblind comprising a surface suitable for at least partially blocking incident sunlight;

wherein at least one passage of the heat exchanger is arranged in the surface of the sunblind.

## Description

The present invention provides a building comprising: a heat exchanger which is connected to a heat-regulating system for cooling respectively heating the interior of the building; and a sunblind comprising a surface suitable for at least partially blocking incident sunlight.

The invention further provides a sunblind.

The invention further provides a system comprising at least two posts; and a slat suitable for at least partially blocking incident light to be arranged between the two uprights.

The invention further provides a method for producing such a sunblind.

Buildings which are cooled or heated using an air-conditioning system are usually provided on the outside with a device comprising a heat exchanger for the purpose of exchanging heat, to be discharged from the building or to be supplied to the building, with the ambient air outside the building. Such devices are often arranged on the roof, on a balcony, or on the outer wall. Such devices cannot usually be described as an attractive sight.

If the device is arranged on a balcony or on a roof which is accessible to people, this device moreover takes up space on this balcony or this roof, this space no longer being available to the people going onto the balcony or the roof. It is for instance possible here to envisage a shop premises wherein a terrace is provided on the roof where customers of the shop can take a seat in order to eat or drink something. Devices for use in air-conditioning systems spoil the appearance of such a terrace and moreover take up space which could have been available for the terrace.

An object of the present invention is to provide a building wherein a heat exchanger for a heat-regulating system takes up less space usable by persons on a roof or a balcony of the building than prior art buildings.

An embodiment of the present invention provides a building comprising: a heat exchanger which is connected to a heat-regulating system for cooling or heating the interior of the building; and a sunblind comprising a surface suitable for at least partially blocking incident sunlight; wherein at least one passage of the heat exchanger is arranged in the surface of the sunblind. Heat exchange with the ambient air is realized by connecting the passage or conduit to the heat-regulating system of the building and guiding through the conduit a medium used for heat transfer. By at least partially realizing a sunblind using passages or conduits of a heat exchanger, the space normally taken up by the heat exchanger is saved, since the heat exchanger is arranged in the space which is taken up by the sunblind. Extra space can thus be used for instance for a terrace. An additional advantage is that the efficiency of the heat exchanger is increased because the surface area available for the heat exchange is quite extensive compared to prior art heat exchangers for buildings. This is because these latter are built into a device with a limited space, wherein the heat exchanger is arranged in a relatively small and relatively closed-off space. The qualification "relatively closed-off" is relative in respect of the present invention.

In this embodiment the sunblind fulfills a dual function, on the one hand by realizing heat exchange between the fluid in the conduit and the outside air and on the other by blocking incident sunlight.

In an embodiment the sunblind is placed as a facade in front of the outer wall of a building. In an alternative embodiment the sunblind is placed on the outer side of the windows and does not cover the outside wall, but only the windows.

In a further embodiment the sunblind comprises at least one passage suitable for guiding a fluid. In a particular embodiment the passage of the heat exchanger in the sunblind is embodied as a tubular member. In an alternative embodiment the passage is embodied as at least one channel extending in a plate-like member.

In yet another embodiment the sunblind comprises a slat. In a further embodiment the passage is formed by at least one channel extending in a slat of the sunblind. In a further embodiment the slats are arranged horizontally. In another embodiment the slats are arranged vertically.

In an alternative embodiment the sunblind comprises a screen. In a further embodiment the screen is flexible and the screen comprises the passage, which likewise has a flexible form, so that the screen can be rolled up. In an alternative embodiment the screen comprises segments and at least one segment comprises a passage of the heat exchanger.

In a favourable embodiment the sunblind comprises a slat which is rotatable about its longitudinal axis and wherein the passage is enclosed by the slat. Due to the rotatability of the slats the position of the slats can be adjusted to the position of the sun. The amount of direct incident sunlight and indirect incident light can hereby be controlled.

In a further embodiment the sunblind further comprises a control device for controlling the angle at which the slat is rotated. In yet another embodiment the sunblind comprises a control device, wherein the control device controls the angle of the slat on the basis of the position of the sun. In this manner the control device controls the optimum angle for the slats relative to the position of the sun, so that the sun does not shine directly into the rooms located behind the sunblind, and only indirect light enters the rooms. Light hereby still enters the rooms through the windows and, if the slats are positioned sufficiently horizontally, depending on the position of the sun, people in the building can still look out through the windows and the sunblind.

An embodiment of the present invention provides a sunblind, wherein the internal spaces of at least two passages are mutually connected. Different passages, which are situated above or adjacently of each other, are mutually connected so as to form as it were a single, longer passage and to obtain an extra-long heat exchanger. In an alternative embodiment passages lying mutually in line are connected to each other. A longer heat exchanger is also obtained in this manner.

In a further embodiment the sunblind further comprises an upright, wherein the connection between at least two passages is situated in the upright. In this way the connections can be concealed.

In a further embodiment of the present invention there is further provided a building, comprising a sunblind as described above.

The present invention further provides a system comprising: at least two uprights; and a slat suitable for at least partially blocking incident light to be arranged between the two uprights, which slat is provided with a passage which is suitable for guiding a fluid.

In a further embodiment there is provided a system further comprising a coupling conduit suitable for mutually connecting at least two passages arranged between uprights.

In yet another embodiment a system is provided wherein the coupling conduit connects two passages, which both extend between two shared uprights. In this way the fluid is guided back and forth between two uprights so that a heat exchanger is formed with the length which is longer than the width of the sunblind.

An embodiment of the present invention provides a system wherein the coupling conduit connects two passages, each of which extends between two uprights and which have no more than one upright in common. In this manner the whole length of the sunblind is utilized for a single heat exchanger, even when the sunblind comprises a plurality of uprights.

The present invention further provides a method for producing a sunblind which comprises a heat exchanger, comprising the steps of: mounting a first end of a passage of a heat exchanger on a first upright, wherein the passage is adjusted to block incident sunlight; mounting a second end of the passage of the heat exchanger on a second upright; connecting a heat-regulating system to a first end of a passage of the heat exchanger; connecting the heat-regulating system to a second end of a passage of the heat exchanger; such that a continuous passage is formed suitable for allowing a fluid to flow out of the heat-regulating system and, via the first end, at least one passage of the heat exchanger and the second end, back again into the heat-regulating system.

Further advantages and embodiments of the present invention will become apparent on the basis of the following description and figures, wherein:
- figure 1 shows a building according to an embodiment of the present invention;
- figure 2 shows a sunblind according to an embodiment of the present invention;
- figure 3 shows a longitudinal section of a slat of a sunblind according to an embodiment of the present invention;
- figure 4 shows a cross-section of a slat of a sunblind according to an embodiment of the present invention;
- figure 5 shows a slat of a sunblind according to an embodiment of the present invention;
- figure 6 shows an exploded view of a first end of a slat of a sunblind according to an embodiment of the present invention; and
- figure 7 shows an exploded view of a second end of a slat of a sunblind according to the embodiment of figure 6.

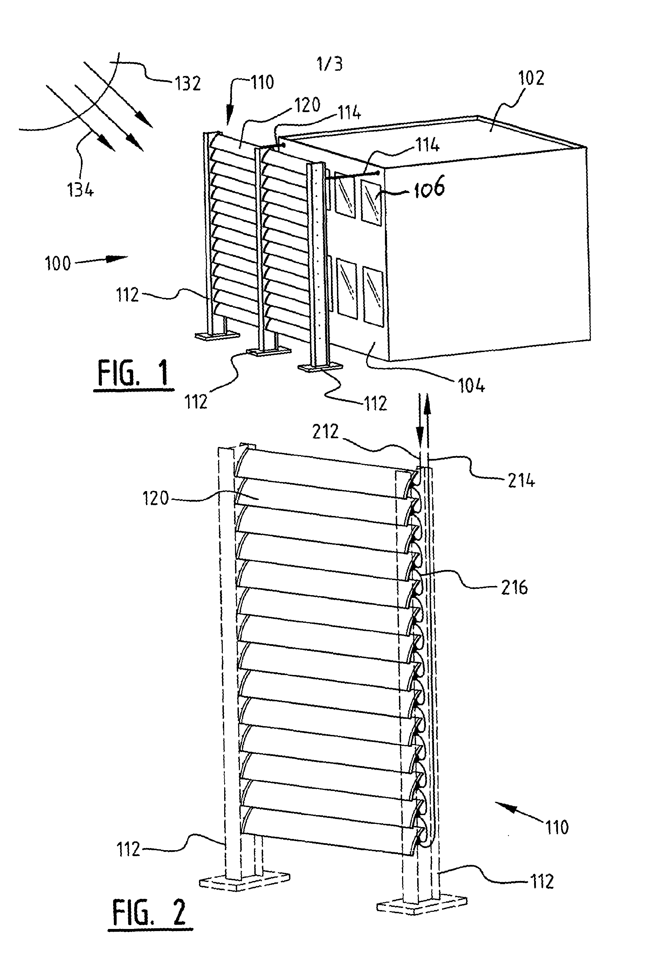

The sun 132 shines on a building 102 (figure 1). Sunlight 134 shines on building 102 and a part of sunlight 134 enters through windows 106. For reasons of, among others, comfort the building 102 is provided on the sun side with a sunblind 110. In the embodiment shown in figure 1, sunblind 110 is formed by a facade which is placed in front of outer wall 104 on the sun side. The facade supports on the ground by means of uprights 112 and is moreover anchored to the outside wall using supports 114. Building 102 is also provided with an air-conditioning system (not shown) for cooling or heating the building 102. A prior art air-conditioning unit comprises at least one heat exchanger for exchanging thermal energy between the cooling liquid or the cooling gas and the outside air. In an embodiment of the present invention the heat exchanger for exchanging thermal energy with the outside air is not provided in an air-conditioning unit placed on the roof of building 102 but in sunblind 110 which is placed in front of outer wall 104 of building 102.

In this embodiment sunblind 110 comprises a number of slats 120 (figure 2), which (partially) block the incident sunlight 134. In the shown embodiment slats 120 are rotatable about their longitudinal axis so that the position of slats 120 can be adjusted to the position of the sun 132. Slats 120 also form the heat exchanger of the air-conditioning system. For this purpose slats 120 are provided with channels through which a cooling fluid can flow. The cooling fluid is supplied through a feed conduit 212. The cooling fluid is pumped through the first slats 120 from the feed conduit. Coupling conduits 216 connect slats 120 to each other so that the cooling fluid can be pumped through a series of slats 120 and eventually guided back to the air-conditioning system via discharge conduit 214. In this manner the cooling fluid is guided through a plurality of slats 120, wherein the cooling fluid relinquishes thermal energy to slats 120, which in turn relinquish the thermal energy to the outside air. The cooling fluid is finally guided back from a final slat 120 to the air-conditioning system via a return conduit 214 .

In accordance with the anticipated required cooling capacity, required temperature drop of the cooling fluid in the heat exchanger, the flow rate of the cooling fluid and the maximum temperature difference between the cooling fluid and the outside air, a suitable number of slats 120 is connected in series or in parallel by means of coupling conduits 216 during installation of the heat exchanger. The cooling fluid can thus be guided back and forth a number of times through different slats between a first and a second upright 112. For this purpose different slats 120 are mutually connected between the two same uprights 112 by means of coupling conduits 216.

In another embodiment the coupling conduits 216 connect slats 120 which are arranged between different uprights 112.

It will be apparent that the skilled person will recognise many possible combinations of connection between slats 120 and will apply these according to the circumstances.

Slats 120 are supported by uprights 112.

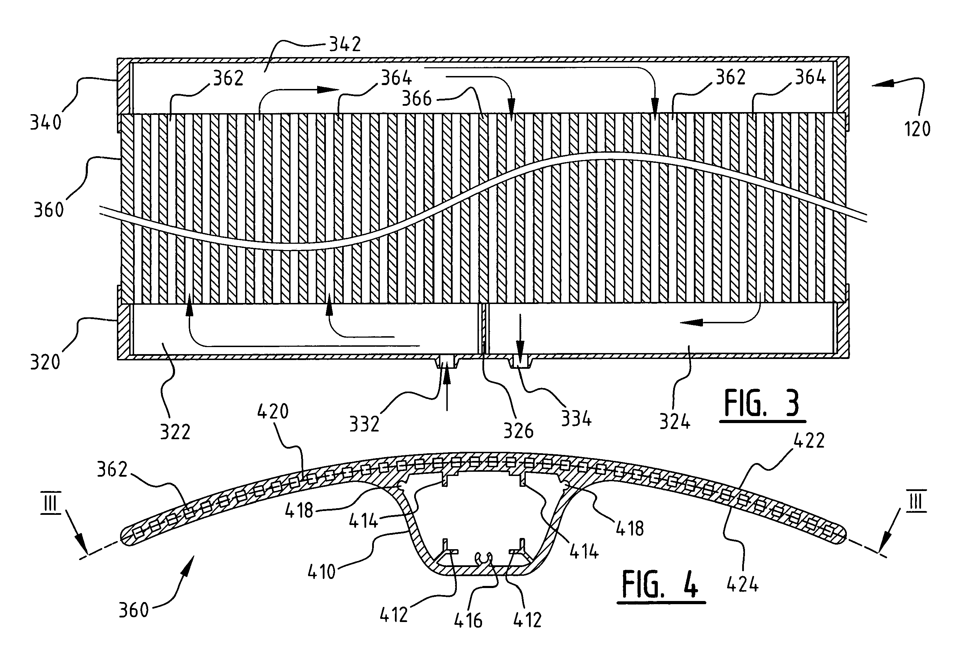

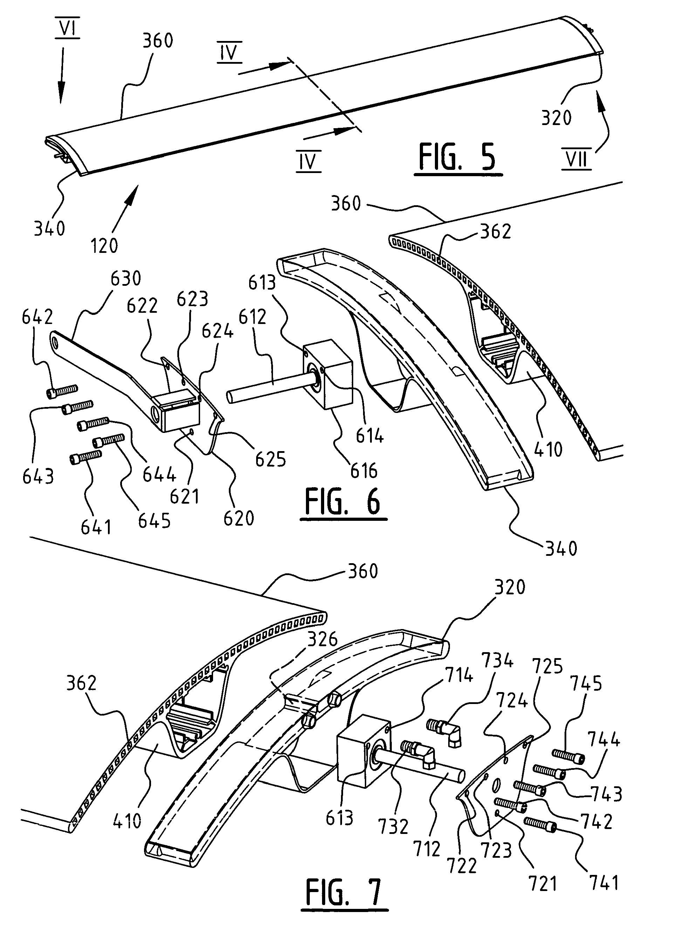

A slat 120 comprises a middle part 360 (figure 5) and two end parts 320, 340. A cross-section IV-IV is shown in figure 4.

Middle part 360 of slat 120 has a curved plate 420 for blocking incident sunlight 134 falling onto surface 422. An axial body 410 arranged on middle part 360 is adapted for arranging of a rotation shaft therein. Situated in plate 420 of slat 120 are channels 362 through which the cooling fluid flows. During cooling the cooling fluid in channels 362 relinquishes heat to plate 420, whereafter plate 420 in turn partially relinquishes the heat to the outside air and partially radiates the heat, the front 422 and rear 424 surfaces serving for this purpose. If the heat exchanger is being used to heat instead of cool building 102, heat exchange takes place in the reverse direction.

A longitudinal section III-III of slat 120 (figure 3) shows middle part 360, with an end part 320 on the one end and an end part 340 on the other end. The flow path of the cooling fluid is readily visible in this figure. This flow path is indicated by the arrows.

Channels 362 run in the longitudinal direction through middle part 360 and are separated from each other by dividing walls 364. The first end part 320 is hollow inside, this cavity being divided into two parts 322, 324 by a wall 326 running in longitudinal direction. This dividing wall 326 further connects to the middle dividing wall 366 of middle part 360. A feed opening 332 supplies cooling fluid in first cavity 322. From first cavity 322 cooling fluid is guided through channels 362 of middle part 360. The cooling fluid can only flow into half of the channels 362 from first cavity 322, since dividing wall 326 prevents the cooling fluid entering second cavity 224 directly from first cavity 322. From the first cavity 322 the cooling fluid is thus guided through (half of) the channels 362 to the other end of middle part 360, where the channels debouch in a cavity 342 of end part 340. End part 340 is not provided with a dividing wall and thus communicates with all channels 362 of middle part 360. The cooling fluid then flows from cavity 342 back into channels 362, which are situated to the right of dividing wall 366 in figure, and from channels 362 into cavity 324 in the first end part 320. Finally, the cooling fluid leaves slat 120 again via discharge opening 334. In the shown embodiment the cooling fluid thus flows through slat 120 in two directions. In another embodiment the cooling fluid flows in only a single direction through slat 120. In this case the feed and discharge openings 332 and 334 are not situated in the same end part 320, but discharge opening 334 is situated in the second end part 340. In this embodiment dividing wall 326 is omitted in first end part 320.

The advantage of the shown embodiment is that the supply and discharge hoses which respectively supply and discharge the cooling fluid to and from the slat are situated at one end of slat 120. Not all uprights 112 of the sunblind then need comprise conduits for cooling fluid.

Figure 6 shows how, in an embodiment of the present invention, a shaft 612 is arranged on slat 120 so that slat 120 can be rotated about a longitudinal axis and can be adjusted to the position of the sun. Middle part 360 with channels 362 is shown on the right. End part 340 is mounted hereon. A rectangular member 616, which fits into the interior of axial body 410 of middle part 360, is arranged on a shaft 612. Axial body 410 is provided on the inside (see in particular figure 4) with profiles 412 and 414 in which the rectangular form 616 of shaft 612 fits tightly. A torque exerted on shaft 612 is hereby transferred to middle part 360, and therewith to slat 120, whereby the slat rotates.

A cover plate 620 is fastened to the end of axial body 410. Cover plate 620 and shaft 612 are mutually connected by inserting bolts 643 and 644 through holes 623 and 624 of cover plate 620 and then tightening them in holes 613 and 614 in rectangular member 616 of rotation shaft 612. Bolts 641, 642 and 645 are placed through holes 621, 622 and 625 of cover plate 620 and tightened in holes 416 and 418 in axial body 410. An arm 630 is connected to cover plate 620 and makes it possible to rotate slat 120 by exerting a force with a tangential component on the distal end of arm 630.

At the other end of slat 120 a rotation shaft 712 is fastened to slat 120 in similar manner. Rotation shaft 712 is provided on one end with a rectangular member 716 which once again fits closely between profiles 412 and 414 in axial body 410 of middle part 360. A cover plate 720 is connected to rectangular member 716 using bolts 743 and 744. Cover plate 720 is connected to middle part 360 by inserting bolts 741, 742 and 745 through holes 721, 722 and 725 and tightening them in holes 416 and 418 of axial body 410 of middle part 360. Finally, coupling pieces 732 and 734 are placed on feed opening 332 and discharge opening 334, on which the supply and discharge conduits are respectively mounted.

The present invention is not limited to the above described preferred embodiments thereof; the rights sought are defined by the scope of the following claims, within which many modifications are possible.

## Claims

1. Building, comprising:
- a heat exchanger which is connected to a heat-regulating system for cooling respectively heating the interior of the building; and
- a sunblind comprising a surface suitable for at least partially blocking incident sunlight;
wherein at least one passage of the heat exchanger is arranged in the surface of the sunblind.

2. Sunblind, comprising at least one passage suitable for guiding a fluid.

3. Sunblind as claimed in claim 2, comprising a slat which is rotatable about its longitudinal axis and wherein the passage is enclosed by the slat.

4. Sunblind as claimed in claim 3, further comprising a control device for controlling the angle at which the slat is rotated.

5. Sunblind as claimed in claim 4, wherein the control device controls the angle of the slat on the basis of the position of the sun.

6. Sunblind as claimed in any of the claims 2-5, wherein the internal spaces of at least two passages are mutually connected.

7. Sunblind as claimed in claim 6, further comprising an upright, and
wherein the connection between at least two passages is situated in the upright.

8. Building as claimed in claim 1, comprising a sunblind according to any of the claims 2-7.

9. System, comprising:
- at least two uprights; and
- a slat suitable for at least partially blocking incident light to be arranged between the two uprights, which slat is provided with a passage which is suitable for guiding a fluid.

10. System as claimed in claim 9, further comprising a coupling conduit suitable for mutually connecting at least two passages arranged between uprights.

11. System as claimed in claim 10, wherein the coupling conduit connects two passages, which both extend between two shared uprights.

12. System as claimed in claim 10, wherein the coupling conduit connects two passages, each of which extends between two uprights and which have no more than one upright in common.

13. Method for producing a sunblind which comprises a heat exchanger, comprising the steps of:
- mounting a first end of a passage of a heat exchanger on a first upright, wherein the passage is adjusted to block incident sunlight;
- mounting a second end of the passage of the heat exchanger on a second upright;
- connecting a heat-regulating system to a first end of a passage of the heat exchanger;
- connecting the heat-regulating system to a second end of a passage of the heat exchanger;
such that a continuous passage is formed suitable for allowing a fluid to flow out of the heat-regulating system and, via the first end, at least one passage of the heat exchanger and the second end, back again into the heat-regulating system.
